Europäisches Patentamt

European Patent Office

Office européen des brevets

(19)

(11) **EP 1 132 758 A1**

(12) **EUROPEAN PATENT APPLICATION**
published in accordance with Art. 158(3) EPC

(43) Date of publication:
**12.09.2001 Bulletin 2001/37**

(51) Int Cl.⁷: **G02B 5/18**, G03H 1/26

(21) Application number: **99953521.4**

(86) International application number:
**PCT/CN99/00181**

(22) Date of filing: **04.11.1999**

(87) International publication number:
**WO 00/26702 (11.05.2000 Gazette 2000/19)**

(84) Designated Contracting States:
**AT BE CH CY DE DK ES FI FR GB GR IE IT LI LU MC NL PT SE**

(30) Priority: **04.11.1998 CN 98124663**

(71) Applicant: **Shao, Xiaojing**
**Zhabei District, Shanghai City 200072 (CN)**

(72) Inventor: **Shao, Xiaojing**
**Zhabei District, Shanghai City 200072 (CN)**

(74) Representative: **Martin, Didier Roland Valéry**
**Cabinet Didier Martin**
**50, chemin des Verrières**
**69260 Charbonnières-les-Bains (FR)**

(54) **RECORDING DEVICE FOR DIFFRACTION GRATING AND METHOD OF RECORDING STEREO OR PLANE IMAGE**

(57)     This invention relates to an apparatus for making diffraction grating optical interference pattern and its corresponding method for recording stereo or plane image. An optical lens group diminish image onto a recording medium or its vicinity by using optical modulator to show image and transform image wave into interference amplitude wave, and has a reference beam projector which beam direction is controllable. This invention may be operated by single step and is easy to alternate operation system or at the same time to combine two operation forms to make same diffraction grating, improving hologram anti-counterfeit function, forming hologram elements without superimposed each other, thus greatly increasing the visibility quality of products.

FIG.1

**Description**

FIELD OF THE INVENTION

The invention relates to a diffraction grating recording apparatus and method for recording 3D (three dimensional) or 2D (two dimensional) images, in particular, to a recording apparatus and method for recording 3D or 2D diffraction grating optical interference images.

DESCRIPTION OF RELATED ART

According to the current technology, an apparatus for producing optical image having diffraction effects obtains Fourier Transform image data using complex calculation to the image. A reduced image is then projected at a photosensitive material to form a 3D element hologram, which can be used to prevent commercial counterfeiting. However, traditional method and apparatus suffer many shortcomings. For example, the Fourier Transform calculation for forming 2D or 3D images unduly consumes computing time and loses image information (or data) in calculation process. Consequently, there is no distinctive difference between 2D or 3D diffraction images and the images formed by using a regular holographic method. This results in imitations by using contact copy (or double exposure) because a potential counterfeiter can easily see through the diffraction images. Thus, traditional technology is not effective for anti-counterfeiting applications.

In addition, traditional method for forming diffraction grating images generally focuses two laser beams at a point to form a grating image element, and integrates dot-matrix grating image elements to form a grating image. Under traditional method, however, there may exist gaps among adjacent grating image elements because two beams may come from two different incidence angles, thus causing the interference points having either circular or elliptical shapes. Furthermore, the optical diffraction intensity of grating image elements is distributed unevenly because of the uneven beam intensity distribution. Furthermore, because of limitations of the beam planes, the accuracy and resolution in a diffraction grating image formed by the traditional method cannot be greatly improved.

To resolve these shortcomings, an electron-beam plotter system (E-beam system) is generally used for scanning each sub-micron dot of a grating image to record diffraction grating image with high resolution. However, the E-beam system also suffers many shortcomings, such as high cost, being difficult to maintain, being restrictive in operating environment, slow scanning speed, and using recording materials having different requirements from regular holographic recording materials. Thus, the E-beam approach is very difficult to combine with conventional hologram recording method.

SUMMARY OF THE INVENTION

The object of the invention is to provide a recording apparatus and method for producing 2D or 3D diffraction grating images, which can provide single step operation for recording diffraction grating images and forming multi-level counterfeiting mechanism to improve effectiveness of counterfeiting prevention.

To achieve this objective, the present invention discloses an apparatus for recording optical diffraction effects onto optical medium, which comprises:

an interference source generator, an acoustic-optical modulator, a diffuser, a pin-hole light shade, a 1/2 wavelength plate, a 1/4 wavelength plate, a beam splitter, a spatial optical modulator, a set of zoom lens, an automatic focusing system, a material fixing platform, an X-Y stage (movable in vertical direction), a reference beam projector, a system control unit, a beam switch valve, and a system supporting block;

wherein the above-mentioned components being connected as follows

the system control unit being connected, via its interface, with the beam switch valve, acoustic-optical modulator, diffuser, spatial optical modulator, zoom lens and X-Y stage, so that the system control unit can control operation and calculation of the apparatus and process images and digital data to record optical medium having special optical diffraction function that cannot be imitated by using contact copy (or double exposure);

a set of components, comprising of the acoustic-optical modulator, diffuser, pin-hole light shade, 1/2 wavelength plate, 1/4 wavelength plate, beam splitter, spatial optical modulator and zoom lens, being deployed on (or in) a rigid capacity to maintain their pre-determined relative structural relations during operation, wherein the rigid capacity connects the automatic focusing system that is movable in vertical dimension and is supported by the system support block;

the interference source generator, system supporting block, system control unit and reference beam projector being deployed such that the X-Y stage can move material fixing platform to exposure position.

In using with the apparatus described above, a method for recording grating having 2D or 3D optical diffraction effect is characterized in comprising the steps of

displaying an image using the spatial light modulator, whose light strength distribution is obtained through computation; transforming coherent beam into incoherent beam using the diffuser that is rotating at high speed, wherein the incoherent beam radiates at the image on the spatial light modulator; passing amplitude distribution of the image through the zooms so that the image is reduced at an appropriate ratio and then is projected onto a photo-sensitive material plane, obtaining an instant distribution of speckle noise using the diffuser that is rotating at high speed during exposure period, reducing the speckle noise inevitably generated by the interference light source due to an average effect of different strength distributions of speckle noises; and integrating beam elements in the above-mentioned process to form a great area of grating hologram having a particular 2D or 3D optical diffraction effect.

In using with the apparatus described above, a method for recording diffraction gratings having stereo or 3D image effect is characterized in comprising the steps of.

displaying an object image from multiple vision angles using the spatial light modulator, stopping the diffuser via the system control unit to obtain a coherent beam, adjusting the zoom lens to project image to infinity distance or onto a focusing-imaging plane between the zoom lens and material; forming a hologram microelement by means of interference between the image and another coherent beam that is guided from reference beam projector and is in opposite direction to the beam coming from the material fixing platform; and repeating to expose a series of images from multiple vision angles to finally form a hologram image having 3D visual effect

In using with the apparatus described above, a method of recording hidden micro-image that is difficult to duplicate is characterized in comprising the steps of:

displaying image or text to be hidden using the spatial light modulator, reducing the image or text and projecting it onto a photo-sensitive material surface using the zoom lens; eliminating speckle noises by rapidly rotating the diffuser, exposing the light intensity of the image or text onto a optical sensitive material plane to form a counterfeit-free optical medium which is invisible to naked eyes and difficult to imitate by using conventional holographic contact copy (or double exposure) method

In using with the apparatus described above, a method for recording digital phase type hologram is characterized in comprising the steps of.

transforming digital gray level information or data computed by the system control unit into the intensity of +1 diffraction beam, by using the acoustic optical modulator, to control the depth of erosion spot area, transforming the +1 diffraction beam into a point light image with a certain diameter through restriction of the pin-hole light shade; closing the spatial light modulator under the control of the system control unit; focusing the point light image onto a photosensitive material plane to transform the point light image into digital phase type hologram; moving the X-Y stage to next exposure position; and repeating to record such a digital phase type holographic information. During the recording operation, the automatic focusing system is constantly adjusted in vertical dimension to ensure that the point light images are focused at a same plane.

BRIEF DESCRIPTION OF THE DRAWINGS

The specific embodiments of the present invention will be described with reference to the following drawings, in which:

FIG. 1 shows a schematic diagram of the mechanical components in the system of the present invention;
FIG. 2 shows a flowchart performed by the components that are controlled by the computer to complete image recording;
FIG. 3 shows the computer interface connection diagram,
FIG 4 shows a diagram illustrating a digital image recording mode;
FIG. 5 shows a diagram illustrating a 3D holographic recording mode; and
FIG. 6 shows a diagram illustrating a grating recording mode.

DETAILED DESCRIPTION OF THE PREFERRED EMBODIMENTS

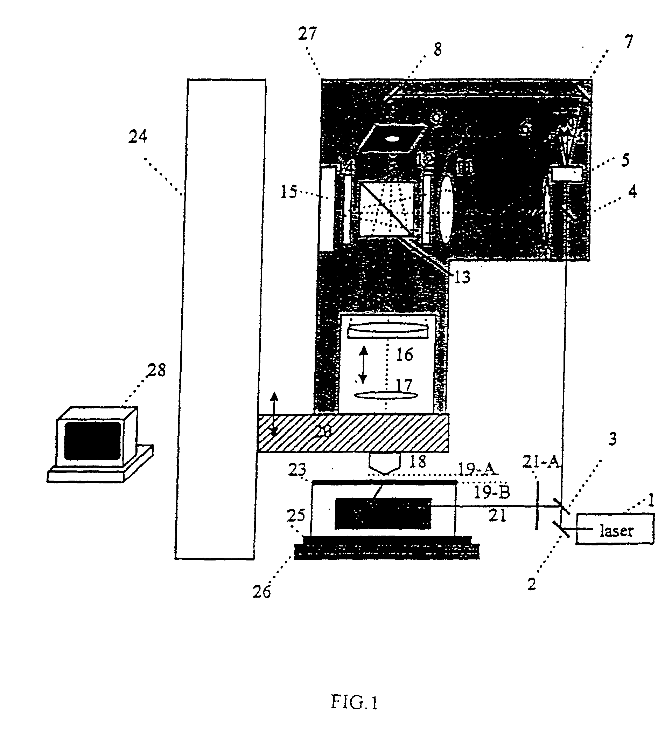

Referring to FIG. 1, there is shown a recording apparatus for producing optical medium having diffraction effect, which includes an interference light (laser) source generator 1, a plane mirror 2, two pellicle mirrors 3 and 4, an acoustic-optical modulator 5 (AOM for short), a capping plate 6, two reflective flat mirrors 7 and 8, a pin-hole light shade 9, a diffuser 10, a lens 11, a 1/2 wavelength plate 12, a beam splitter 13, a 1/4 wavelength plate 14, a spatial light modulator 15 (SLM for short), a set of zoom lenses 16-18, a focusing-imaging plane 19-A, a photo-sensitive material plane 19-B, an automatic focusing system 20, a beam switch valve 21-A, a reference light projector 22, a material fixing platform 23, a system supporting block 24, an X-Y stage 25-26 (movable in horizontal and vertical directions), a rigid capacity 27, and a system control unit 28 (computer).

SLM 15 is an image display for displaying images on SML. When SLM 15 is illuminated by a laser beam, an image, which is reflected by or passes through the SLM, has a wavelength of illuminating rays, thus forming an image to be recorded on a particular photo-sensitive material. In general, LCD (liquid Crystal Display) or DMD (Digital Micro-mirror Apparatus) possesses this function.

Several photo-sensitive materials as the following can be used

1. Photo-resist

This type of material can be generally used for the photomicrograph of microcircuit in the semiconductor industry and can also be used as optical interference recording materials. In making holograph, the interference fringe pattern of an object and reference beams is exposed on a photo-resist plate. After being developed, the relief structure fringe pattern is formed on the photo-resist plate. It may also be used to only record some patterns of amplitude information, i.e the distribution in intensity and magnitude by using its photosensitive erosion property. The present invention uses this property to record diffraction grating and micro-text.

2. Ultraviolet-sensitive material

The present invention uses UV laser to record the information on UV sensitive film. Because resolution of recording information is inversely proportional to wavelength of light used, the resolution of information recorded with UV laser is higher than that with general visible light rays

3. Silver halide material

This is a type of micro-particle sensitive material, which is similar to regular photographic sensitive films. However, its particle diameter is much smaller than regular photographic sensitive films, and therefore, its resolution is 5-10 times higher than the regular photographic sensitive films. Accordingly, this type of material is suitable to record high-density interference fringe patterns. The present invention can use this type of material to record image amplitude information (i.e distribution in intensity and brightness), thereby recording diffraction grating and micro-text or image pattern. This type of material can also be used to record reflection type full parallax holographic stereogram. This is accomplished by using a method in which an object's serial images from different visual angles are first input into a computer through digital transmission or scanning. The computer then displays these serial images on SLM one by one, and the zoom lens in turn project their image planes onto the imaginary plane of 19-A or onto an infinity point. The light wave of an image interferences with the reference beam coming form the reference beam projector on the silver halide material, thereby forming an element hologram. By moving the X-Y stage, the above-described process is repeated to form a final reflection type full parallax holographic stereogram, thus providing a virtual (or imaginary) full parallax stereograph. In general, this type of material should have 10 to 25 μm in thickness, excluding the transparent supporting portion.

4. Photopolymer material

Using the photoconductive effect of monomer, the photopolymer material generates so called linkage reaction to bring about the local polymerization with periodic density variation, thereby achieving the effect of light wave diffraction. The present invention uses this type of material to record reflection type full parallax holographic stereogram. The specific recording method has been described above.

In the present invention, the connecting relations between the computer control apparatus and mechanical components are described as follows

To control the operation of the whole system, a pre-written software program running at the computer transmits signals, images and other information through a computer interface The software program transmits a pulse through a serial port 1 on the interface to start or stop the drive motor of beam switch valve 21-A.

In a similar fashion, by running the software program, a serial port 3 sends out a pulse to start or stop the adjustment-drive motor of zoom lens 16, 17, a serial port 4 sends out a pulse to start or stop the drive motor of diffuser 10; a serial port 2 sends out digital information or data to AOM 5 to determine open or close status of AMO 5, a serial port 5 sends out digital information or data to X-Y stage 25 to move photosensitive material to a recording position corresponding to an image position; and parallel port or interface card sends out a series of images to be displayed on SLM.

In the present invention, the connecting and moving relations among the main components are described as follows:

Through its interface, connected to the system control unit 28 are beam a switch valve 21-A, an acoustic-optical modulator 5, a diffuser 10 (including its control valve of drive motor), a spatial light modulator 15, zoom lens 16-18 (including its drive motor), X-Y stage 25-26, and other motor-driven controlling mechanisms. The system control unit 28 controls operation process, performs calculations, and processes image and digital data that will be recorded as outputs, thereby producing recordings having special optical diffraction property or having the property that is unable to be imitated by contact copy (or doubling exposure).

Deployed on (or in) rigid capacity 27 is a system that comprises components of. the pellicle mirror 4, acoustic-optical modulator 5, capping plate 6, reflective flat mirrors 7 and 8, pin-hole light shade 9, diffuser 10, lens 11, 1/2 wavelength plate 12, beam splitter 13, 1/4 wavelength plate 14, spatial light modulator 15, zoom lens 16-18, and other optical components. These components are deployed on (or in) rigid capacity 27 in a manner such that the pre-determined relative positions of these components are maintained during operation. Rigid capacity 27 is a supporting body because the components deployed on (or in) there require a restrictive control to maintain their relative positions to each other during operation. Connected to rigid capacity 27 is automatic focusing system 20 that can be moved in vertical direction. System supporter 24 supports and moves automatic focusing system 20.

Interference light source (laser) generator 1, flat mirror 2, pellicle mirror 3, system supporting block 24, system control unit 28, and reference beam projector 22 are all non-movable (or fixing position) components. X-Y stage 25-26 can move material fixing platform 23 into a position where the material on the material fixing platform 23 is exposed

The beam generated from interference light source generator 1 is reflected by flat mirror 2, and the reflected beam is divided into two beams through pellicle mirror 3. Of which, the reflected beam is used as a reference beam, and the beam that straightly passes through the pellicle mirror 3 is further divided into two beams by pellicle mirror 4. Of which, the beam that straightly passes through pellicle mirror 4 used as the light source for digital recording, and the reflected one is used as the lighting source for spatial light modulator 15.

Acoustic-optical modulator 5 splits the beam that straightly passes through pellicle mirror 4 into a straight-through beam, a +1 diffraction beam, and a -1 diffraction beam. Of which, the straight-through beam and some of the +1 or -1 diffraction beam are intercepted by capping plate 6. The remaining un-intercepted -1 or +1 beam is reflected by reflective flat mirrors 7 and 8 to reach pin-hole light shade 9. Zoom lenses 16-18 focus the point image trough pin-hole light shade 9 onto optical sensitive material plane 19-B. The light intensity of the point image is controlled by the data form the computer and by acoustic-optical modulator 5, thereby to form exposure points with different erosion depth This exposing process to form exposure points is repeated to produce a phase type record having optical diffraction effect by using laser beam playback processing.

For the holographic stereogram recording mode, the beam reflected by pellicle mirror 4 passes through diffuser 10, which is stopped in this mode, to diffuse the beam. The 1/2 wavelength plate 12 and 1/4 wavelength plate 14 adjust the polarized direction of the diffused beam. The lens 11 focuses the wave front of the light beam wave diffused by diffuser 10 onto spatial light modulator 15 to form an image, which is equivalent to indirectly transform the image on spatial light modulator 15 into a diffused light wave plane so that lenses 16-18 can focus the light wave image onto photosensitive material plane 19-B or its adjacent place. The optical wave of polarized light illuminates the image on spatial light modulator 15. After being reflected by spatial light modulator 15, the optical wave is polarized by 1/4 wavelength plate 14, and then is reflected toward zoom lens 16-18 by polarizing beam splitter 13. At this time, the image is transformed to coherent light wave, and then focused, by zoom lens 16-18, at infinity or onto a position between photosensitive material plane 19-B and zoom lens 16-18 (closer to the lens)

On the other hand, beam 21 split by pellicle mirror 3 is reflected onto photosensitive material 19-B by reference light projector 22, and is superimposed on photosensitive material plane 19-B with the wave front of the image mentioned above. The superimposed exposure step combines the interference fringe patterns of both beams to form an element hologram. Repeating of recording many of such element holograms can generate an element matrix to form holographic stereogram. After developing the material that has been exposed, an omni-directional stereograph in X-Y parallax can be displayed under illuminating rays at an appropriate incident angle.

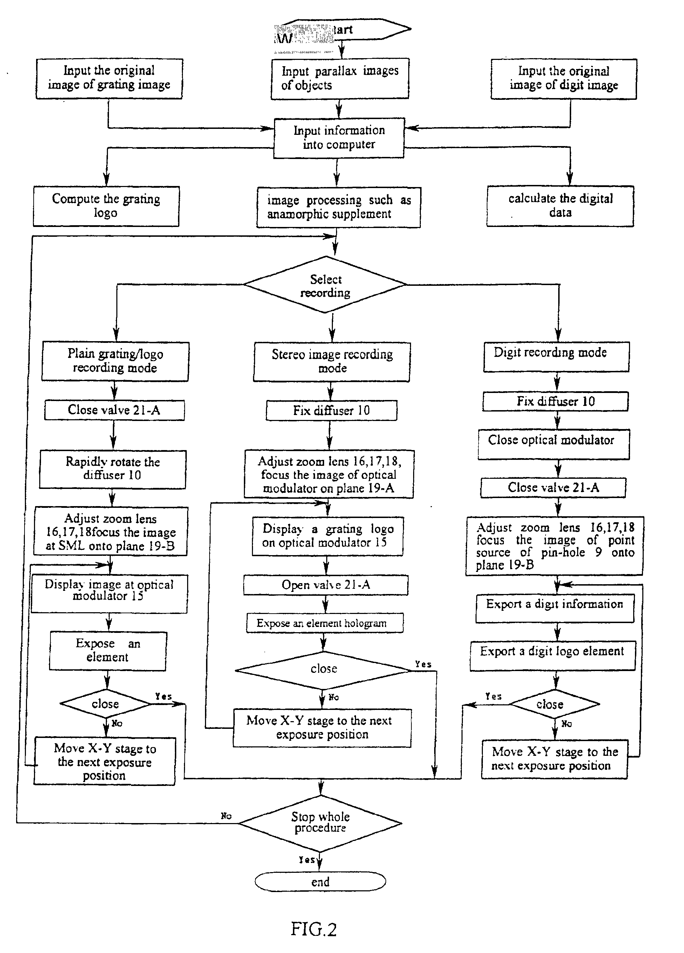

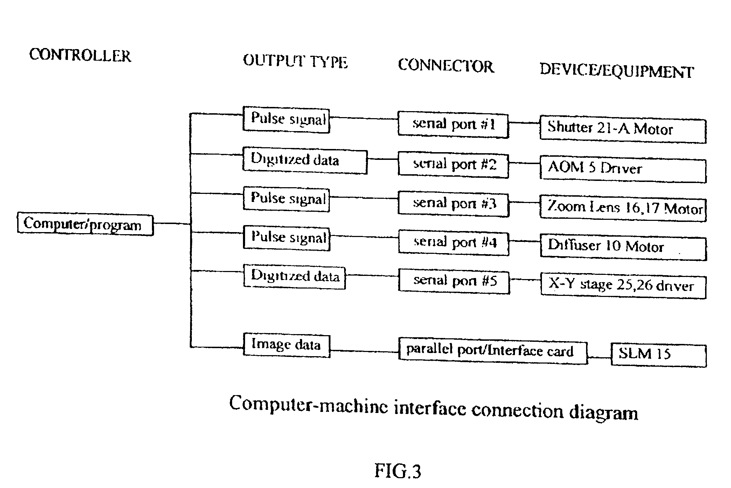

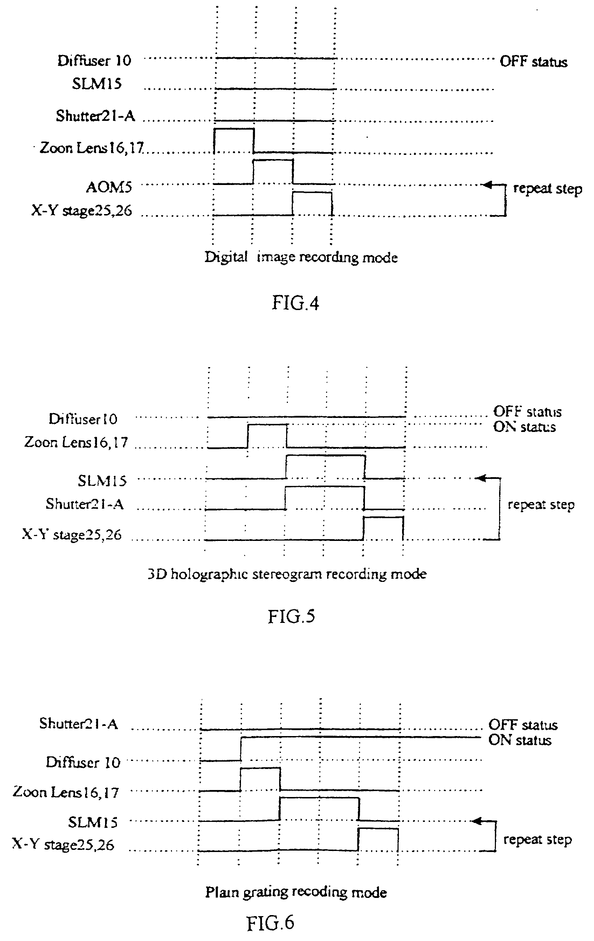

As shown in FIG. 2 - FIG. 6, the present invention provides three different recording modes, as will be described as follows:

At first, the computer performs a simple and necessary processing to original images For the original images to be recorded as digital images, the computer will process them into digital data through digitizing computation For the original perspective images to be recorded as 3D holographic stereogram, the computer performs image processing, such as anemographic supplement or color separation. For the original images to be recorded as diffraction grating images, the computer computes grating pattern to be recorded according to the following equations

$$\text{Grating Pattern (X, Y)} = 2\,R^2\,O^2\,x\cos[\phi_r - \phi_o]$$

$$\phi_r = 2\,\pi/\lambda\,[\sin\phi_{rx} + \sin\phi_{ry}]$$

$$\phi_o = 2\pi/\lambda\,[\sin\phi_{ox} + \sin\phi_{oy}]$$

where:

R and O are the amplitudes of reference beam and objective beam, respectively,
$\lambda$ is intended playback wavelength,
$\phi_{rx}$, $\phi_{ry}$ are intended illuminating angle for playback to X and Y axis, respectively, and
$\phi_{ox}$, $\phi_{oy}$ are intended playback angle to X and Y axis, respectively.

If a grating recording mode is selected, the computer sends out information or data through its interface to control the mechanical components as follows at first closing beam switch valve 21-A; rotating diffuser 10; focusing an image on SLM plane to form an image onto a photosensitive material plane so that at that time a grating pattern is displayed on SLM, wherein its displaying time of the grating pattern is its exposure time; and then displaying a black image to complete an exposure. Thereafter, the computer moves X-Y stage 25, 26 to the next exposure position and returns the process to display next grating pattern image to be recorded on SLM, till the exposing is completed.

If 3D holographic stereogram recording mode is selected, through serial port 4, the computer performs the following steps, at first stopping diffuser 10; adjusting SLM plane to focus an image onto plane 19-A; displaying a parallax image on SLM plane; at the same time opening beam switch valve 21-A to let the reference beam to interfere with the light wave that, as above described, has been imaged and projected onto plane 19-A, thereby forming an element hologram, determining whether the element hologram is the last exposure element to decide to stop the system or continue to perform the exposure process; and if further exposure is needed, moving X-Y stage to the next exposure position, and repeating the process of displaying the next parallax image onto SLM, till all element holograms are exposed.

If the digital recording mode is selected, the following steps will be performed: at first stopping the diffuser 10 and displaying a black image on SLM; closing beam switch valve 21-A (shutter); focuses the point image that passes through pin-hole 9 onto plane 19-B by adjusting zoom lens 16, 17; determining whether +1 and -1 diffracted beams exist on AOM5 and their intensity based on digital information (or data) generated by the computer, wherein this step corresponds to generating a digital data (or information) shown in FIG. 2, and the existence or non-existence of the +1 beam determines whether there is an exposure point on the sensitive material, and intensity of +1 determines depth of exposure points on photosensitive materials so that digital type of information (or data) can be recorded; upon moving X-Y stage 25, 26 to the next exposure position, outputting digital information (or data) to AOM5, to determine existence or non-existence of diffraction beams and to determine the intensity of the beams at the next exposure position.

In using with the apparatus shown in FIG. 1, a method of grating having 2D or 3D optical diffraction effect comprises the steps of displaying an image of optical intensity distribution obtained from calculation using spatial light modulator 15, transforming a coherent beam into an incoherent beam by rapidly rotating diffuser 10, the incoherent beam being illuminated at the image on spatial light modulator 15; reducing the image by a appropriate reducing ratio through zoom lens 16-18; projecting the reduced image on photo sensitive material plane 19-B, obtaining an instant distributed speckle noise by rapidly rotating diffuser 10; and reducing inevitable speckle noise generated from an interference beam source by averaging result of the speckle noises that have different strength distributions. The micro-dot elements recorded according to the process described above can be integrated to form a great area of grating hologram (logo) having specific 2D or 3D optical diffraction effect.

In using with the apparatus shown in FIG. 1, a method for recording images having stereo-image effect comprises the steps of: displaying an object image from multiple-vision angles using spatial light modulator 15; stopping diffuser 10 that is controlled by system control unit 18 to obtain a coherent beam; adjusting zoom lens 16-18 to project the image at infinity or onto focusing image plane 19-A located between lens 18 and material fixing platform 23; interfering the coherent beam mentioned above with another coherent beam that is introduced from reference beam projector 22 and comes from a direction in opposite to material fixing platform 23, to form a microelement hologram; and repeating to expose a series of multiple vision-angles images to form a hologram having 3D vision effect.

In using with the apparatus shown in FIG 1, a method of recording a hidden micro-image, which is difficult to duplicate, comprises the steps of: displaying an image or text to be hidden using the spatial light modulator 15; reducing the image and projecting the reduced image onto focusing image plane 19-A by using zoom lens 16-18; eliminating speckle noise by rapidly rotating the diffuser 10; and exposing light intensity of the reduced image on optical sensitive material plane 19-B to produce a micro-image or micro-text that is invisible to naked eyes and difficult to duplicate using conventional holographic contact copy (or double exposure)

The hidden image or text does not have optical diffraction function (or property) along a particular direction because no grating information of diffraction function (or property) is added during recording Observed by naked eyes, the hidden image or text only presents irregular dots. When the hidden image or text is reproduced using conventional holographic contact copy (or double exposure), only noise information is presented on reproduced optical medium, because irregular light waves will become objective beams that can cover the original image or text and destroy its clarity. The noise information can be identified by amplifier lens or microscopes When the image or text is reduced into about 2 to 6 μm in size, it can only be seen by a microscope with amplification over 200 times. When the hidden image or text is reproduced using contact copy (or double exposure), only meaningless noises are presented on reproduced material, and reproduction of such micro-image or micro-text becomes impossible.

In using with the apparatus shown in FIG. 1, a method for recording the digital phase type hologram comprises the steps of transforming digital gray level information (or data) computed by system control unit 28 into intensity variation of +1 diffraction beam using acoustic-optical modular 5 to control the depth in erosion spot area; changing the beam into a point source with a certain diameter by passing it through a pin-hole light shade; closing the spatial light modulator 15 under control of system control unit 28; focusing the pin-hole image using zoom lens 16-18 onto optical sensitive material plane 19-B to form a digital phase type information, moving X-Y stage 25, 26 to next exposure position; and repeating to record such digital phase type holographic information. During recording process, the position of automatic focusing system is constantly adjusted to ensure the pin-hole image is focused on a same plane.

To form a specific optical medium that has multi-level anti-counterfeiting function that can be interpreted by machines and eyes, the present invention can record different visual effects and/or different exposure functions on a same optical medium by properly setting accuracy of disposition of the system control mechanism. The different visual effects include grating pattern with 2D color alternating effect or holographic information with stereo effect And the different exposure functions include anti-contact-copy (anti-doubling-exposure) functions such as hidden logo or micro-text, digital phase type hologram, etc

The present invention provides the following advantages:

1. Simple to operate. 'Unlike conventional complex multiple-step system, the present invention is a one-step system that can be used to operate an apparatus comprising of the composite optical components.

2. Easy to alternate operating system or to combine two operating modes simultaneously to produce one diffraction grating, thereby obtaining constituent elements having different effects. For example, producing Kinoform requires digital recording mode that uses a single laser beam, while recording stereo (or 3D) image requires performing video projection that uses a spatial light modulator. Integrating different constituent elements into one diffraction grating can greatly increase anti-counterfeiting function, and can easily produce diffraction grating that is recognizable by machine. By integrating different constituent elements into one diffraction grating, many people can use the apparatus and method described here to produce hologram images having different patterns, such as holographic stereogram, Kinoform, Kinegram and Excelgram.

3. The present invention can record micro-text or micro-image onto any part of grating area that does not have stereo or diffracted function (or property) or that can superimpose on it. The present invention can greatly improve anti-counterfeiting functions because the micro-text or micro-image in this area cannot be reproduced by using contact copy (or double exposure) duo to optical properties in this area.

4. There is no superposition between the element holograms formed by a special reference beam projector, and the information interference between element holograms can therefore be avoided. Furthermore, no gaps exist between adjacent elements, thus greatly improving the visual quality of final product.

**Claims**

1. An apparatus for recording optical medium with or without optical diffraction effect, the main element of which comprising :

interference source generator, acoustic optical modulator, diffuser, pin-hole light shade, 1/2wavelength plate, 1/4 wavelength plate, beam splitter, spatial light modulator, zoom lens, automatic focusing system, material fixing platform, zoom lens, automatic focusing system, material fixing platform, X-Y stage, reference beam projector, system control unit, beam switch valve and system supporting block; said main element interconnecting and moving as follows:

said system control unit connecting with beam switch valve , acoustic-optical modulator, diffuser, spatial light modulator, zoom lens, X-Y stage and other maneuverable elements through its interface port, making operation controlled by program evaluation and reviews and computation, processing image and data intended to record, in order to record optical medium with specific optical diffraction function or being unable to reproduce and palm off through doubling exposure; the system comprising of acoustic-optical modulator, diffuser, pin-hole light shade, 1/2 wavelength plate, 1/4 wavelength plate, beam splitter, spatial light modulator, zoom lens and other optical designs, being contained in a rigid capacity in order to maintain their specific relative structural relation during operation, which is connecting with said automatic focusing system having up-and-down movement and automatic focusing function whose motion is supported by said system supporting block; the interference source generator, system supporting block, system control unit and reference beam projector being a fixed unit, while X-Y stage moving material fixing platform to the place intended to expose

2. A method of recording grating having 2D or 3D optical diffraction effect, characterized in:

displaying the image by means of said spatial light modulator, whose light strength distribution is obtained through computation; transforming coherent beam into incoherent beam by means of said diffuser rotating at high speed, which radiates at the image on spatial light modulator; the amplitude distribution of image being reduced at an appropriate multiplying power through zoom lens and then being projected and imaged onto photo-sensitive material plane;

the instant distribution of the speckle noise being obtained by means of diffuser rotating at high speed during exposure period, the certainty speckle noise produced by interference source begin reduced because different strength distribution of speckle noise is added up resulting in an average effect, and micro-element recorded according to above-mentioned procedure being integrated to form a great area of grating logo having specific 2D or 3D optical diffraction effect.

3. A method of record gratings having stereo-image effect by means of the apparatus according to claim 1, characterized in :

displaying object images of multiple version angles by means of spatial light modulator;

stopping diffuser by means of system control unit to get interference beam;

adjusting zoom lens to project image at infinity or onto focusing-imaging plane between lens and material and to interfere between image and another interference beam, which is guided from reference beam projector and is in opposite direction to the beam coming from material fixing platform to form a microelement hologram,

sequently exposing a series of image with multiple vision angles again and again to form a hologram image having 3D visual effect at last

4. A method of recording a hidden micro-image hardly to duplicate according to the unit described in claim 1, characterized in:

displaying image or text intended to be hidden by means of spatial light modulator;

reducing, projecting and imaging said image onto photo-sensitive material surface by means of zoom lens;

rapidly rotating diffuser to eliminate speckle noise;

exposing the light, strength of image onto optical sensitive material plane to manufacture a counterfeit-free optical medium, which is invisible to the naked eye and hard to reproduce by means of conventional holographic contact copy mode.

5. A method of recording the digital phase type hologram according to the apparatus described in claim 1, characterized in

transforming the digital gray level data computed by system control unit into the intensity of +1 diffraction beam by means of acoustic-optical modulator in order to control the depth of the erosion spot area;

taking beam to become a point source with a certain diameter through the restriction of pin-hole light shade.

closing spatial light modulator by means of system control unit,

focusing and imaging said pin-hole image onto photo-sensitive material plane by means of zoom lens in order to be exposed into a point of digital phase type information;

removing X-Y stage to the next exposure position;

recording such a digital phase type holographic information again and again, and during the recording period the position on Y-axis is adjusted by automatic focusing system at any time to ensure pin-hole image is focused at the same plane.

6. The apparatus and method according to claim 1, 2, 3, 4 and 5, characterized in:

through appropriate fine disposition done by said system control unit, different vision effects, such as the grating logo having plain color transformation effect or the holographic information with stereo-effect, and different doubling-proof exposure functions, such as hidden logo or micro-text or digital phase type hologram, are recorded on the same optical medium in the meantime to form a specific optical medium which has multiple anti-counterfeiting and can be interpreted by the machine or eye.

FIG.1

FIG.2

CONTROLLER          OUTPUT TYPE          CONNECTOR          DEVICE/EQUIPMENT

| | | |
|---|---|---|
| Pulse signal | serial port #1 | Shutter 21-A Motor |
| Digitized data | serial port #2 | AOM 5 Driver |
| Pulse signal | serial port #3 | Zoom Lens 16,17 Motor |
| Pulse signal | serial port #4 | Diffuser 10 Motor |
| Digitized data | serial port #5 | X-Y stage 25,26 driver |
| Image data | parallel port/Interface card | SLM 15 |

Computer/program

Computer-machine interface connection diagram

FIG.3

EP 1 132 758 A1

Diffuser 10 ......................................... OFF status
SLM15 .................................................
Shutter21-A ............................................
·Zoon Lens16,17 ......................................
AOM5 .......................................... repeat step
X-Y stage25,26 .....................................

Digital image recording mode

## FIG.4

Diffuser 10 ...................................... OFF status
Zoon Lens16,17 .................................. ON status
SLM15 ..................................
Shutter21-A ............................ repeat step
X-Y stage25,26 ......................

3D holographic stereogram recording mode

## FIG.5

Shutter21-A .......................................... OFF status
Diffuser 10 ....................................... ON status
Zoon Lens16,17 ....................................
SLM15 ..................................
X-Y stage25,26 .................................. repeat step

Plain grating recoding mode

## FIG.6

## INTERNATIONAL SEARCH REPORT

International application No.

PCT/CN99/00181

### A. CLASSIFICATION OF SUBJECT MATTER

G02B5/18 , G03H1/26

According to International Patent Classification (IPC) or to both national classification and IPC

### B. FIELDS SEARCHED

Minimum documentation searched (classification system followed by classification symbols)

IPC ; G02B5/18 , G03H1/26

Documentation searched other than minimum documentation to the extent that such documents are included in the fields searched

Electronic data base consulted during the international search (name of data base and, where practicable, search terms used)

WPI , CNPAT:   IPC:G02B5/18 ,   G03H1/26

### C. DOCUMENTS CONSIDERED TO BE RELEVANT

| Category* | Citation of document, with indication, where appropriate, of the relevant passages | Relevant to claim No. |
|---|---|---|
| A | US3,408,656  ( Whole doc. ) | 1~5 |
| A | WO9746898  ( Whole doc. ) | 1~5 |
| A | JP9007216  ( Abstract ) | 1 |

☐ Further documents are listed in the continuation of Box C. ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim (S) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>17..January.2000  ( 17.01.2000 ) | Date of mailing of the international search report<br>0 3 FEB 2000 (0 3. 0 2. 0 0) |
|---|---|
| Name and mailing address of the ISA/CN<br>6 Xitucheng Rd., Jimen Bridge, Haidian District,<br>100088 Beijing, China<br>Facsimile No. 86-10-62019451 | Authorized officer<br><br>Telephone No. 86-10-62093921 |

Form PCT/ISA /210 (second sheet) (July 1998)

# EP 1 132 758 A1

**INTERNATIONAL SEARCH REPORT**
Information on patent family members

| Citied Application Number | Publication Date | Family Number | Publication Date |
|---|---|---|---|
| US3,408,656 | 681029 | FR1522937 | 680902 |
| | | GB1189675 | 710705 |
| | | DE1572637 | 711202 |
| WO9746898 | 971211 | EP1572637 | 711202 |
| JP9007216 | 970110 | NONE | |

Form PCT/ISA /210 (patent family annex) (July 1998)